# EUROPÄISCHE PATENTANMELDUNG

(11) **EP 3 933 428 A1**
(43) Veröffentlichungstag der Anmeldung: **05.01.2022**
(21) Anmeldenummer: 20183193.0
(22) Anmeldetag: 30.06.2020
(51) Int. Cl.: G01S 1/20, G01S 5/02, G01S 5/14

(54) **VERFAHREN ZUM BETRIEB EINES FUNKORTUNGSSYSTEMS, BASISSTATION UND AUSWERTEVORRICHTUNG**

(71) Anmelder: Siemens Aktiengesellschaft, 80333 München (DE)
(72) Erfinder: Schubert, Alexander, 09376 Oelsnitz (DE)

(57) **Zusammenfassung**

In einem Funkortungssystem wird eine Position eines Transponders (201-203) mittels mehrerer Basisstationen (101-105) des Funkortungssystems anhand von Funksignal-Empfangszeitdifferenzen in einem ersten Betriebsmodus oder anhand von Funksignal-Laufzeiten in einem zweiten Betriebsmodus ermittelt. Zur Ermittlung seiner Position sendet der Transponder (201-203) per Broadcast eine Nachricht (300) an die Basisstationen (101-105). Die Nachricht empfangende Basisstationen ermitteln jeweils eine Empfangssignalstärke eines zur Übermittlung der Nachricht verwendeten Transpondersignals. Eine Auswertevorrichtung (100) ermittelt eine Anzahl der Basisstationen, die das Transpondersignal mit einer über einer vorgegebenen Mindestsignalstärke liegenden Empfangssignalstärke empfangen haben und versetzt die Basisstationen dementsprechend in den ersten oder in den zweiten Betriebsmodus.

## Beschreibung

Die vorliegende Erfindung betrifft ein Verfahren zum Betrieb eines Funkortungssystems, insbesondere eines Real-time Locating System (RTLS), und eine Basisstation sowie eine Auswertevorrichtung für ein Funkortungssystem zur Durchführung des Verfahrens.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

Die ältere europäische Patentanmeldung mit dem Anmeldeaktenzeichen 19200472.9 betrifft eine funkbasierte bzw. optische Objektidentifizierungsvorrichtung, die über eine Geräteschnittstelle mit einem Transponder eines Funkortungssystems verbunden wird, der an einer ausgewählten Stelle der Objektidentifizierungsvorrichtung angeordnet ist. Bei einer Erfassung seiner Position übermittelt der Transponder eine Geräteadresse bzw. einen Geräteidentifikator der Objektidentifizierungsvorrichtung an Basisstationen bzw. weitere Transponder des Funkortungssystems. Diese Informationen werden an ein der Objektidentifizierungsvorrichtung zugeordnetes Projektierungs- bzw. Überwachungssystem übermittelt, das anhand der übermittelten Position des Transponders und der Geräteadresse bzw. des Geräteidentifikators dem Transponder im Projektierungs- bzw. Überwachungssystem zugeordnete Ortsinformationen validiert, ergänzt bzw. korrigiert.

Aus der älteren europäischen Patentanmeldung mit dem Anmeldeaktenzeichen 20176748.0 ist ein Funkortungssystem bekannt, bei dem eine Position eines Transponders mittels mehrerer Basisstationen des Funkortungssystems bzw. weiterer Transponder anhand von Funksignallaufzeiten erfasst wird. Dabei sind die Basisstationen jeweils an einer vorgegebenen Position angeordnet. Zumindest ausgewählte Basisstationen umfassen jeweils eine Sensoreinrichtung, die an der vorgegebenen Position der jeweiligen Basisstation zumindest einen für die vorgegebene Position charakteristischen optischen, elektro-magnetischen, induktiven bzw. kapazitiven Referenz-Messwert erfasst. Die Sensoreinrichtungen ermitteln während des Betriebs des Funkortungssystems jeweils zyklisch bzw. fortlaufend aktuelle Messwerte und vergleichen diese mit dem jeweiligen Referenz-Messwert. Die Basisstationen bzw. eine mit den Basisstationen verbundene Überwachungseinrichtung signalisieren jeweils bei einer Abweichung des aktuellen Messwerts vom jeweiligen Referenz-Messwert eine Warnung.

In auf Ultra-Breitband-Technik (UWB) basierenden Funkortungssystemen können insbesondere Time Difference of Arrival (TDOA) und Two-way Ranging (TWR) als Verfahren zur Positionsbestimmung unabhängig voneinander verwendet werden. Beide Verfahren weisen unterschiedliche Anforderungen hinsichtlich verwendeter Hardware und räumlicher Anordnung der Hardware auf. Man definiert das zu lokalisierende mobile Gerät und Geräte, die an festen geometrischen Punkten angebracht sind als Anker-Geräte. TDOA ermöglicht eine Ortung einer Vielzahl von Transpondern gleichzeitig, erfordert hierfür jedoch zumindest 3 Basisstationen. Dagegen wird für TWR grundsätzlich nur eine Basisstation benötigt, um zumindest eine Distanz zu einem zu ortenden Transponder zu ermitteln.

Der vorliegenden Erfindung liegt daher die Aufgabe zugrunde, ein Verfahren zum Betrieb eines Funkortungssystems zu schaffen, das eine effiziente Nutzung zur Verfügung stehender Basisstationen und eine leistungsfähige Ortung ermöglicht, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen, durch eine Basisstation mit den in Anspruch 9 angegebenen Merkmalen und durch eine Auswertevorrichtung mit den in Anspruch 10 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Betrieb eines Funkortungssystems, bei dem eine Position eines Transponders mittels mehrerer Basisstationen des Funkortungssystems anhand von Funksignal-Empfangszeitdifferenzen in einem ersten Betriebsmodus der Basisstationen oder zumindest eine Entfernung des Transponders zu einer Basisstation anhand von Funksignal-Laufzeiten in einem zweiten Betriebsmodus der Basisstationen ermittelt wird. Dabei sind die Basisstationen jeweils an einer vorgegebenen Position angeordnet.

Das Funkortungssystem kann beispielsweise ein zumindest RFID-, UWB-, bzw. 2,4 GHz ISM-Band-basiertes Real-time Locating System sein, das grundsätzlich noch weitere Positionserfassungskomponenten, wie GPS oder Inertialsensorik umfassen kann. Vorzugsweise wird die Position des Transponders im ersten Betriebsmodus entsprechend Time Difference of Arrival ermittelt. Dabei sind die Basisstationen untereinander zeitsynchronisiert. Entsprechend einer weiteren bevorzugten Ausgestaltung wird die Position des Transponders oder die Entfernung des Transponders zu einer Basisstation im zweiten Betriebsmodus entsprechend Two-way Ranging ermittelt.

Erfindungsgemäß sendet der Transponder zur Ermittlung seiner Position per Broadcast eine Nachricht an die Basisstationen. Die Basisstationen, die die Nachricht empfangen haben, ermitteln jeweils eine Empfangssignalstärke eines zur Übermittlung der Nachricht verwendeten Transpondersignals und übermitteln eine Information über die Empfangssignalstärke an eine mit den Basisstationen verbundene Auswertevorrichtung des Funkortungssystems. Die Auswertevorrichtung ermittelt eine Anzahl der Basisstationen, die das Transpondersignal mit einer über einer vorgegebenen Mindestsignalstärke liegenden Empfangssignalstärke empfangen haben. Die durch den Transponder per Broadcast gesendete Nachricht zur Erfassung seiner Position ist vorzugsweise ein entsprechend Time Difference of Arrival seitens eines zu ortenden Objekts emittierter Broadcast.

Falls die Anzahl der ermittelten Basisstationen zumindest einem vorgegebenen Schwellwert entspricht, versetzt die Auswertevorrichtungen die Basisstationen erfindungsgemäß in den ersten Betriebsmodus. Dagegen versetzt die Auswertevorrichtungen die Basisstationen in den zweiten Betriebsmodus, falls die Anzahl der ermittelten Basisstationen kleiner als der vorgegebene Schwellwert ist.

Die vorliegende Erfindung ermöglicht beispielsweise, dass ein zu ortendes Objekt, mit dem ein Transponder verbunden ist, sich von einem Erfassungsbereich des Funkortungssystems, in dem für TDOA hinreichend viele Basisstationen verfügbar sind, sich in einen anderen Erfassungsbereich bewegt, in dem nur eine Ortung mittels TWR möglich ist. Insbesondere kann in Erfassungsbereichen, in denen eine geringe Anzahl gleichzeitig zu ortender Objekte erwartet wird, dementsprechend eine geringe, zur Ortung mittels TWR hinreichende Anzahl von Basisstationen vorgesehen werden. Darüber hinaus kann es in einigen Erfassungsbereichen, wie Gängen oder Tunneln, aufgrund ihrer Geometrie bzw. je nach Anwendungsanforderungen ausreichend sein, lediglich eine Entfernung zwischen einem Transponder und einer Basisstation zu ermitteln. Insgesamt

Entsprechend einer bevorzugten Ausgestaltung der vorliegenden Erfindung versetzt die Auswertevorrichtungen die Basisstationen in den ersten Betriebsmodus, falls zumindest 4 Basisstationen das Transpondersignal mit einer über der vorgegebenen Mindestsignalstärke liegenden Empfangssignalstärke empfangen haben. Demgegenüber versetzt die Auswertevorrichtungen die Basisstationen vorteilhafterweise in den zweiten Betriebsmodus, falls 3 Basisstationen das Transpondersignal mit einer über der vorgegebenen Mindestsignalstärke liegenden Empfangssignalstärke empfangen haben. Darüber hinaus kann die Auswertevorrichtung anhand von Kenntnis über Nachbarschaftsbeziehungen zwischen den Basisstationen bzw. über die Positionen der Basisstationen über ein Umschalten zwischen dem ersten und dem zweiten Betriebsmodus entscheiden.

Die erfindungsgemäße Basisstation für ein Funkortungssystem ist zur Durchführung eines Verfahrens entsprechend vorangehenden Ausführungen vorgesehen sowie dafür ausgestaltet und eingerichtet, zusammen mit weiteren Basisstationen eine Position eines Transponders anhand von Funksignal-Empfangszeitdifferenzen in einem ersten Betriebsmodus oder zumindest eine Entfernung des Transponders zu einer Basisstation anhand von Funksignal-Laufzeiten in einem zweiten Betriebsmodus zu ermitteln. Außerdem ist die Basisstation dafür ausgestaltet und eingerichtet, vom Transponder zur Erfassung seiner Position eine per Broadcast gesendete Nachricht zu empfangen sowie eine Empfangssignalstärke eines zur Übermittlung der Nachricht verwendeten Transpondersignals ermitteln und eine Information über die Empfangssignalstärke an eine Auswertevorrichtung des Funkortungssystems zu übermitteln. Darüber hinaus ist die Basisstation dafür ausgestaltet und eingerichtet, durch die Auswertevorrichtung in den ersten oder zweiten Betriebsmodus versetzt zu werden.

Die erfindungsgemäße Auswertevorrichtung für ein Funkortungssystem zur Durchführung eines Verfahrens entsprechend vorangehenden Ausführungen vorgesehen sowie dafür ausgestaltet und eingerichtet, von Basisstationen des Funkortungssystems übermittelte Informationen über eine jeweilige Empfangssignalstärke von Transpondersignalen zu empfangen, mittels der jeweils eine an die Basisstationen gerichtete Nachricht eines Transponders zur Erfassung seiner Position übermittelt wird. Außerdem ist die Auswertevorrichtung dafür ausgestaltet und eingerichtet, eine Anzahl der Basisstationen zu ermitteln, die das Transpondersignal mit einer über einer vorgegebenen Mindestsignalstärke liegenden Empfangssignalstärke empfangen haben. Darüber hinaus ist die Auswertevorrichtung dafür ausgestaltet und eingerichtet, die Basisstationen in einen ersten Betriebsmodus zu versetzen, falls die Anzahl der ermittelten Basisstationen zumindest einem vorgegebenen Schwellwert entspricht. Ferner ist die Auswertevorrichtung dafür ausgestaltet und eingerichtet, die Basisstationen in einen zweiten Betriebsmodus zu versetzen, falls die Anzahl der ermittelten Basisstationen kleiner als der vorgegebene Schwellwert ist.

Die vorliegende Erfindung wird nachfolgend an einem Ausführungsbeispiel anhand der Zeichnung näher erläutert. Es zeigt
- Figur 1: Funkortungssystem mit mehreren Basisstationen für ein industrielles Automatisierungssystem,
- Figur 2: ein Ablaufdiagramm für ein Verfahren zum Betrieb des Funkortungssystems gemäß Figur 1.

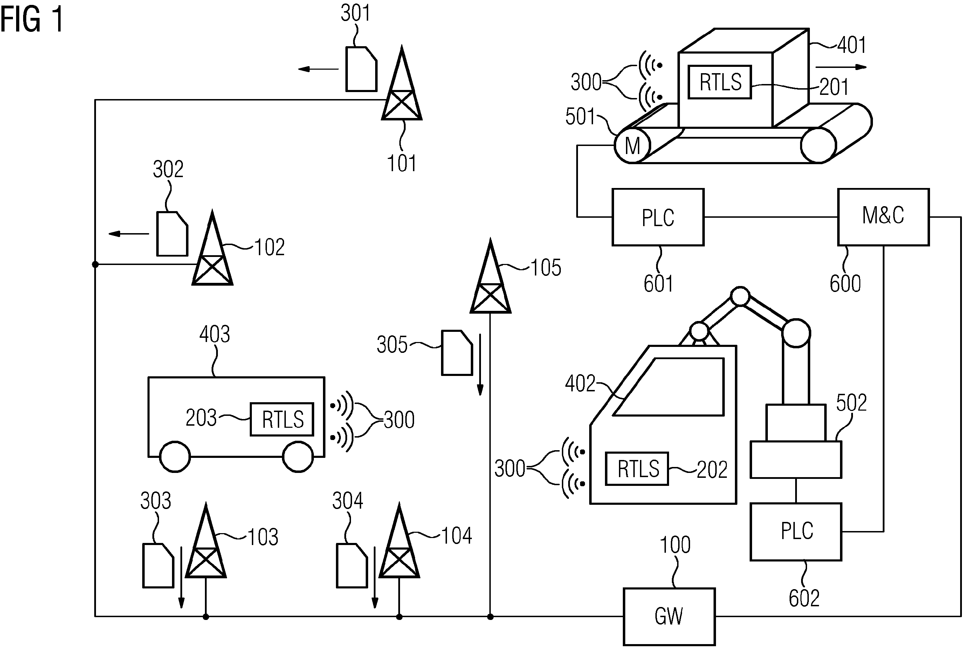

Das in Figur 1 dargestellte Funkortungssystem ist im vorliegenden Ausführungsbeispiel ein UWB- bzw. 2,4 GHz ISM-Band-basiertes Real-time Locating System (RTLS), das mehrere Basisstationen 101-105 umfasst. Mittels der Basisstationen 101-105 werden anhand von Funksignallaufzeiten bzw. anhand von Funksignal-Empfangszeitdifferenzen Positionen von RTLS-Transpondern 201-203 erfasst, die an zu ortenden Gegenständen angebracht sind.

Mittels eines ersten RTLS-Transponders 201 wird beispielsweise ein Stückgut 401 auf einem Transportband überwacht, dessen Antrieb 501 durch eine erste speicherprogrammierbare Steuerung 601 gesteuert wird. Ein zweiter RTLS-Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einer zentralen Überwachungs- und Steuerungseinheit 600 verbunden ist. Durch die Überwachungs- und Steuerungseinheit 600 werden u.a. die speicherprogrammierbaren Steuerungen 601, 602 und das Funkortungssystem projektiert bzw. überwacht.

Das Funkortungssystem dient im vorliegenden Ausführungsbeispiel außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter RTLS-Transponder 203 angeordnet. Neben UWB- bzw. 2,4 GHz ISM-Band-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in die RTLS-Transponder 201-203 und Basisstationen 101-105 des Funkortungssystems integriert sein.

Die Basisstationen 101-105 sind mit einer als Gateway 100 ausgestalteten Auswertevorrichtung des Funkortungssystems verbunden. Die RTLS-Transponder 201-203 übermitteln vorzugsweise jeweils einen dem jeweils zu ortenden Gegenstand zugeordneten Objektidentifikator an die Basisstationen 101-105. Auf dieser Basis senden die Basisstationen 101-105 Datagramme 301-305, die insbesondere erfasste Signallaufzeitinformationen, Signalempfangszeitinformationen, Signalstärkemesswerte von empfangenen Transpondersignalen bzw. Objektidentifikatoren umfassen, zur Auswertung an das Gateway 100. Das Gateway 100 des Funkortungssystems übermittelt wiederum die erfassten Positionen der RTLS-Transponder 201-203 einschließlich der Objektidentifikatoren an die Überwachungs- und Steuerungseinheit 600. Dementsprechend ist das Überwachungs- und Steuerungseinheit 600 dafür konfiguriert, eine graphische Darstellung der übermittelten Positionen der RTLS-Transponder 201-203 aufzubereiten bzw. anhand der übermittelten Positionen der RTLS-Transponder 201-203 einschließlich der Objektidentifikatoren den RTLS-Transpondern 201-203 im Überwachungs- und Steuerungseinheit 600 jeweils zugeordnete Ortsinformationen zu validieren.

Die Positionen der RTLS-Transponder 201-203 werden mittels der Basisstationen 101-105 in einem ersten Betriebsmodus anhand von Funksignal-Empfangszeitdifferenzen oder in einem zweiten Betriebsmodus anhand von Funksignal-Laufzeiten ermittelt. Im zweiten Betriebsmodus können alternativ zu einer Positionsermittlung jeweils zumindest Entfernungen der RTLS-Transponder 201-203 zu einer Basisstation 101-105 oder zu mehreren Basisstationen 101-105 ermittelt werden. Die Basisstationen sind jeweils an einer vorgegebenen Position angeordnet, über die im Gateway 100 bzw. in der Überwachungs- und Steuerungseinheit 600 eine Information vorliegt.

Beim vorliegenden Ausführungsbeispiel werden die Positionen der RTLS-Transponder 201-203 im ersten Betriebsmodus entsprechend Time Difference of Arrival (TDOA) ermittelt. Hierfür sind die Basisstationen 101-105 untereinander zeitsynchronisiert. Dagegen werden die Positionen der RTLS-Transponder 201-203 bzw. die Entfernungen der RTLS-Transponder 201-203 zu Basisstationen 101-105 im zweiten Betriebsmodus entsprechend Two-way Ranging ermittelt. Details zur Positionsermittlung mittels TDOA sind beispielsweise in Wikipedia unter Multilateration (https://en.wikipedia.org/wiki/Multilateration) beschrieben.

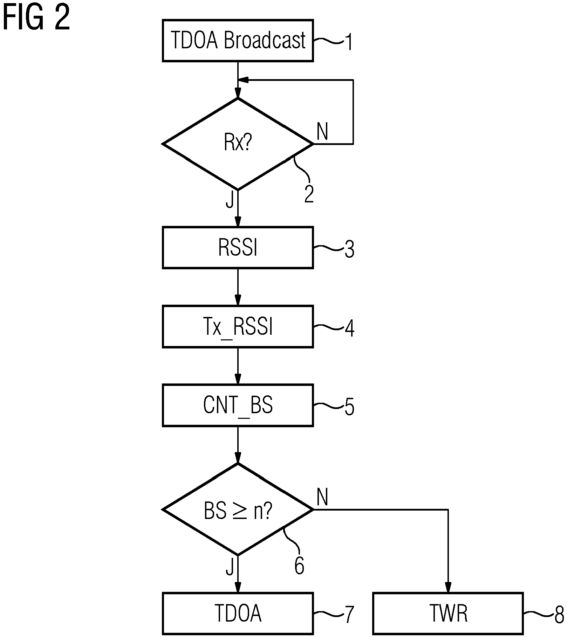

Entsprechend dem in Figur 2 dargestellten Ablaufdiagramm senden die RTLS-Transponder 201-203 zur Ermittlung ihrer jeweiligen Position TDOA-Broadcasts 300 an die Basisstationen 101-105 (Schritt 1). Die Basisstationen 101-105 überwachen entsprechend Schritt 2 in beiden Betriebsmodi fortlaufend, ob TDOA-Broadcasts 300 empfangen worden sind. Falls dies der Fall ist, ermitteln die Basisstationen 101-105, die einen TDOA-Broadcast 300 empfangen haben, jeweils eine Empfangssignalstärke, z.B. RSSI, eines zur Übermittlung des jeweiligen TDOA-Broadcast 300 verwendeten Transpondersignals (Schritt 3). Nachfolgend übermitteln diese Basisstationen 101-105 entsprechend Schritt 4 jeweils eine Information über die jeweilige Empfangssignalstärke an das Gateway 100. Auf dieser Basis ermittelt das Gateway 100 eine Anzahl der Basisstationen 101-105, die das jeweilige Transpondersignal mit einer über einer vorgegebenen Mindestsignalstärke liegenden Empfangssignalstärke empfangen haben (Schritt 5).

Darüber hinaus überprüft das Gateway 100 entsprechend Schritt 6, ob die Anzahl der Basisstationen 101-105, die das jeweilige Transpondersignal mit erforderlicher Mindestsignalstärke empfangen haben, zumindest einem vorgegebenen Schwellwert n entspricht. Falls die Anzahl der ermittelten Basisstationen 101-105 zumindest dem vorgegebenen Schwellwert n entspricht, versetzt das Gateway 100 die jeweiligen Basisstationen 101-105 in den ersten Betriebsmodus. Damit wird die Position des jeweiligen Transponders 201-203 in Schritt 7 entsprechend TDOA ermittelt. Ist die Anzahl der ermittelten Basisstationen 101-105 kleiner als der vorgegebene Schwellwert n ist, versetzt das Gateway 100 die jeweiligen Basisstationen 101-105 in den zweiten Betriebsmodus. In diesem Fall wird die Position bzw. die Entfernung des jeweiligen Transponders 201-203 in Schritt 8 entsprechend TWR ermittelt. Insbesondere antworten die jeweiligen Basisstationen 101-105 dann auf den TDOA-Broadcast 300 mit einer TWR-Response-Nachricht, die durch den jeweiligen Transponder 201-203 zur Signallaufzeitermittlung wiederum mit einer TWR-Final-Nachricht beantwortet wird.

Im vorliegenden Ausführungsbeispiel versetzt das Gateway 100 die Basisstationen 101-105 in den ersten Betriebsmodus, falls zumindest 4 Basisstationen 101-105 das jeweilige Transpondersignal mit erforderlicher Mindestsignalstärke empfangen haben. Dagegen versetzt das Gateway 100 die Basisstationen 101-105 in den zweiten Betriebsmodus, falls 3 Basisstationen 101-105 das Transpondersignal mit erforderlicher Mindestsignalstärke empfangen haben. Zusätzlich zur Überprüfung entsprechend Schritt 6 kann das Gateway 100 anhand von Kenntnis über Nachbarschaftsbeziehungen zwischen den Basisstationen 101-105 bzw. über die Positionen der Basisstationen 101-105 über ein Umschalten zwischen dem ersten und dem zweiten Betriebsmodus entscheiden.

## Patentansprüche

1. Verfahren zum Betrieb eines Funkortungssystems, bei dem
- eine Position eines Transponders (201-203) mittels mehrerer Basisstationen (101-105) des Funkortungssystems anhand von Funksignal-Empfangszeitdifferenzen in einem ersten Betriebsmodus oder zumindest eine Entfernung des Transponders zu einer Basisstation anhand von Funksignal-Laufzeiten in einem zweiten Betriebsmodus ermittelt wird, wobei die Basisstationen jeweils an einer vorgegebenen Position angeordnet sind,
- der Transponder zur Ermittlung seiner Position per Broadcast eine Nachricht (300) an die Basisstationen sendet,
- die Nachricht empfangende Basisstationen jeweils eine Empfangssignalstärke eines zur Übermittlung der Nachricht verwendeten Transpondersignals ermitteln und eine Information (301-305) über die Empfangssignalstärke an eine mit den Basisstationen verbundene Auswertevorrichtung (100) des Funkortungssystems übermitteln,
- die Auswertevorrichtung eine Anzahl der Basisstationen ermittelt, die das Transpondersignal mit einer über einer vorgegebenen Mindestsignalstärke liegenden Empfangssignalstärke empfangen haben,
- die Auswertevorrichtungen die Basisstationen in den ersten Betriebsmodus versetzt, falls die Anzahl der ermittelten Basisstationen zumindest einem vorgegebenen Schwellwert entspricht,
- die Auswertevorrichtungen die Basisstationen in den zweiten Betriebsmodus versetzt, falls die Anzahl der ermittelten Basisstationen kleiner als der vorgegebene Schwellwert ist.

2. Verfahren nach Anspruch 1,
bei dem die Position des Transponders im ersten Betriebsmodus entsprechend Time Difference of Arrival ermittelt wird und bei dem die Basisstationen untereinander zeitsynchronisiert sind.

3. Verfahren nach einem der Ansprüche 1 oder 2,
bei dem die Position des Transponders oder die Entfernung des Transponders zu einer Basisstation im zweiten Betriebsmodus entsprechend Two-way Ranging ermittelt wird.

4. Verfahren nach einem der Ansprüche 1 bis 3,
bei dem die Nachricht ein entsprechend Time Difference of Arrival seitens eines zu ortenden Objekts emittierter Broadcast ist.

5. Verfahren nach einem der Ansprüche 1 bis 4,
bei dem die Auswertevorrichtungen die Basisstationen in den ersten Betriebsmodus versetzt, falls zumindest 4 Basisstationen das Transpondersignal mit einer über der vorgegebenen Mindestsignalstärke liegenden Empfangssignalstärke empfangen haben.

6. Verfahren nach einem der Ansprüche 1 bis 5,
bei dem die Auswertevorrichtungen die Basisstationen in den zweiten Betriebsmodus versetzt, falls 3 Basisstationen das Transpondersignal mit einer über der vorgegebenen Mindestsignalstärke liegenden Empfangssignalstärke empfangen haben.

7. Verfahren nach einem der Ansprüche 1 bis 6,
bei dem die Auswertevorrichtung anhand von Kenntnis über Nachbarschaftsbeziehungen zwischen den Basisstationen und/oder über die Positionen der Basisstationen über ein Umschalten zwischen dem ersten und dem zweiten Betriebsmodus entscheidet.

8. Verfahren nach einem der Ansprüche 1 bis 7,
bei dem das Funkortungssystem ein zumindest RFID-basiertes, UWB-basiertes und/oder 2,4 GHz ISM-Band-basiertes Real-time Locating System ist.

9. Basisstation für ein Funkortungssystem zur Durchführung eines Verfahrens nach einem der Ansprüche 1 bis 8, wobei die Basisstation dafür ausgestaltet und eingerichtet ist,
- zusammen mit weiteren Basisstationen eine Position eines Transponders anhand von Funksignal-Empfangszeitdifferenzen in einem ersten Betriebsmodus oder zumindest eine Entfernung des Transponders zu einer Basisstation anhand von Funksignal-Laufzeiten in einem zweiten Betriebsmodus zu ermitteln,
- vom Transponder zur Erfassung seiner Position eine per Broadcast gesendete Nachricht zu empfangen,
- eine Empfangssignalstärke eines zur Übermittlung der Nachricht verwendeten Transpondersignals ermitteln und eine Information über die Empfangssignalstärke an eine Auswertevorrichtung des Funkortungssystems zu übermitteln,
- durch die Auswertevorrichtung in den ersten oder zweiten Betriebsmodus versetzt zu werden.

10. Auswertevorrichtung für ein Funkortungssystem zur Durchführung eines Verfahrens nach einem der Ansprüche 1 bis 8, wobei die Auswertevorrichtung dafür ausgestaltet und eingerichtet ist,
- von Basisstationen des Funkortungssystems übermittelte Informationen über eine jeweilige Empfangssignalstärke von Transpondersignalen zu empfangen, mittels der jeweils eine an die Basisstationen gerichtete Nachricht eines Transponders zur Erfassung seiner Position übermittelt wird,
- eine Anzahl der Basisstationen zu ermitteln, die das Transpondersignal mit einer über einer vorgegebenen Mindestsignalstärke liegenden Empfangssignalstärke empfangen haben,
- die Basisstationen in einen ersten Betriebsmodus zu versetzen, falls die Anzahl der ermittelten Basisstationen zumindest einem vorgegebenen Schwellwert entspricht, wobei im ersten Betriebsmodus Positionen von Transpondern anhand von Funksignal-Empfangszeitdifferenzen ermittelt werden,
- die Basisstationen in einen zweiten Betriebsmodus zu versetzen, falls die Anzahl der ermittelten Basisstationen kleiner als der vorgegebene Schwellwert ist, wobei im zweiten Betriebsmodus Positionen von Transpondern anhand von Funksignal-Laufzeiten ermittelt werden.
